# EUROPÄISCHE PATENTSCHRIFT

(11) **EP 2 265 085 B1**
(45) Veröffentlichungstag und Bekanntmachung des Hinweises auf die Patenterteilung: **25.02.2015**
(21) Anmeldenummer: 10182143.7
(22) Anmeldetag: 07.09.1996
(51) Int. Cl.: H04W 88/18, H04W 76/02, H04W 28/06, H04W 36/08, H04L 1/18

(54) **Verfahren zum Übertragen von Daten, insbesondere von GSM-Daten**
Process for transmitting data, in particular GSM data
Procédé de transmission de données, notamment des données GSM

(30) Priorität: 29.11.1995 DE 19544367
(43) Veröffentlichungstag der Anmeldung: 22.12.2010
(62) Teilanmeldung aus: 03004652.8
(73) Patentinhaber: IPCom GmbH & Co. KG, 82049 Pullach (DE)
(72) Erfinder: Mayer, Ralf, 71546, Aspach (DE)
(74) Vertreter: Gigerich, Jan

(56) Entgegenhaltungen:
- EP-A- 0 332 345
- WO-A-96/32823
- WO-A1-95/08237
- BOSCH TELECOM AND DETEMOBIL ED - BOSCH TELECOM AND DETEMOBIL: "Proposal for a tandem free operation (TFO) of speech codecs in MS to MS calls using inband signalling", ETSI/SMG/SMG2/SEG, TAMPERE (FI), 14. November 1995 (1995-11-14), Seiten p.1-4, XP002689003,

## Beschreibung

Die Erfindung betrifft ein Verfahren zum Übertragen von Daten, insbesondere GSM-Daten zwischen mindestens zwei Teilnehmern.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN - Public Switched Telephone Network), wurden die GSM-Daten in GSM-Format in das Rahmenformat des Kommunikationsnetzes - 64 kbit/s PCM bei PSTN - mittels einer Umcodiereinrichtung/einem Transcoder umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 0860/0861 erfolgt die digitale Sprachübertragung in sogenannten "TRAU-frames" (transcode and rate adaptor unit); d. h. Übertragungsrahmen im 16 kbit/s-Format bei FR (Full Rate) Übertragung und 8 kbit/s oder auch 16 kbit/s bei HR (Half Rate) Übertragung.

Aus der US 5,091,945 ist es bekannt, anstelle von Sprachdaten nur signalparameter (Sprachparameter) zu übertragen, aus denen die Nutzdaten wieder rekonstruiert werden können.

Aus der EP-A-A-0 332 345 ist es bekannt, die Übertragung von Sprachabtastwerten in einem ersten Datenstrom und die Übertragung von Synchronisationsmuster durchzuführen.

Aus der nach dem Prioritätsdatum der vorliegenden Anmeldung veröffentlichten internationalen Patentanmeldung WO 96/23297 ist es bekannt, die Übertragung von Sprachabtastwerten in einem ersten Datenstrom und die Übertragung von Kennungsinformationen sowie von Sprachparametern zur Sprachdatenrekonstruktion in einem zweiten Datenstrom durchzuführen. Ein wesentlicher Nachteil des in WO 96/23297 offenbarten Datenübertragungsverfahrens besteht darin, dass die Kennungsinformationen permanent übertragen werden. Die WO 96/23297 entspricht der europäischen Patentanmeldung EP 806 032 und ist nur gemäß Art. 54 (3) EPÜ möglicherweise von Bedeutung.

### Vorteile der Erfindung

Das erfindungsgemäße Verfahren mit den Merkmalen des Hauptanspruchs hat demgegenüber den Vorteil, dass es bei einem Handover von einem TFO-Betrieb mit zwei involvierten TFO-fähigen Umcodiereinrichtungen (TCE1, TCE2) zu einer nicht-TFO-fähigen Umcodiereinrichtung (TCE3) in der ersten Umcodiereinrichtung (TCE1) folgende Maßnahmen vorsieht:
- Der Datenstrom zwischen den Umcodiereinrichtungen (TCE1, TCE2) wird in einen ersten Datenstrom mit Sprachabtastwerten, insbesondere PCM-Sprachabtastwerten, zur Übertragung und in einen zweiten Datenstrom mit Signalparametern zur Sprachdatenrekonstruktion, insbesondere TRAU-Rahmen unterteilt;
- die so unterteilten Datenströme werden während eines TFO (Tandem Free Operation)-Betriebs gleichzeitig von der ersten Umcodiereinrichtung (TCE1) via ein A-Interface übertragen, über das die erste Umcodiereinrichtung (TCE1) mit einer Vermittlungsstelle verbunden ist;
- bei einem Handover von der zweiten Umcodiereinrichtung (TCE2) zu einer nicht-TFO-fähigen Umcodiereinrichtung (TCE3) wird in der ersten Umcodiereinrichtung (TCE1) ein Abbruch der von der zweiten Umcodiereinrichtung (TCE2) ankommenden Signalparameter registriert und es läuft eine erste vorbestimmte Zeit (Tᵣₑₗₑₐₛₑ) an, wobei nach Ablauf der ersten vorbestimmten Zeit (Tᵣₑₗₑₐₛₑ) vom A-Interface ankommende Daten enkodiert werden, wobei im zum A-Interface abgehenden Datenstrom zu den TRAU-Rahmen decodierte Sprachabtastwerte "PCM*" eingefügt werden, wobei der zuerst gesendete TRAU ein TRAU* ist, wobei die Sprachabtastwerte "PCM*" die Sprachabtastwerte mit den prozessierten höherwertigen 6 Bits sind, wobei der TRAU* eine Kennungsinformation darstellt; und
- eine zweite vorbestimmte Zeit (T_{sync}) in der ersten Umcodiereinrichtung (TCE1) anläuft, wobei die erste Umcodiereinrichtung (TCE1) nach Ablauf der zweiten vorbestimmten Zeit (T_{sync}) in einen Normalbetrieb zurückfällt, in dem die Sprachabtastwerte codiert bzw. decodiert werden.

Besonders vorteilhaft ist es, dass sich eine Verbesserung der Qualität übertragener Daten, insbesondere von GSM-Sprachdaten, insbesondere bei Tandembetrieb bei Verbindungen zwischen mobilen Teilnehmern ergibt. Durch die gleichzeitige Übertragung von Abtastwerten, z. B. PCM-Werten, und Signalparametern zur Sprachdatenrekonstruktion sind die Störungen bei einer Transcodiereinrichtung, die nicht für den tandemfreien Betrieb mit transparenter Durchschaltung von TRAU-Rahmen ausgestattet ist, geringer. Denn es werden auch bei der Übertragung von Kennungsinformationen immer noch Sprachdaten im ersten Datenstrom übertragen.

Auch bei Handover-Betrieb bietet die Erfindung Vorteile. Die Erfindung ist einfach in bestehende Systeme zu implementieren. Nur die Sprach-Transcoder eines Netzes sind betroffen. Beispielsweise werden von den 8 Bits pro Sprachabtastwert die beiden niedrigwertigsten Bits durch einen TRAU-Rahmen ersetzt (die Sprache wird dann auf 6 Bits reduziert), in welchem Kennungsinformation/Synchroninformation eingeblendet werden kann, um die Transcodiereinrichtungen aufeinander zu synchronisieren.

Durch Klemmung der niedrigwertigsten Bits auf Null bei der Übertragung von Sprachabtastwerten während eines Gesprächsaufbaus ist die Sprachqualität gegenüber bisher vorgeschlagenen Verfahren verbessert.

Bei einem Handover, d. h. bei einem Wechsel auf eine andere Transcodiereinrichtung, kann ein Rahmenverlust schnell festgestellt werden, bzw. vermieden werden, dass ungültige Rahmen als TRAU-Rahmen weiterverarbeitet werden. Eine nicht zum tandemfreien Betrieb ausgestattete Transcodiereinrichtung kann während eines Synchronisationsvorganges schon Sprachabtastwerte verarbeiten. Wenn nach abgeschlossener Synchronisation anstelle der Abtastwerte ein reduziertes Ruhemuster gesendet wird, kann der Sprachdecoder der Transcodiereinrichtung abgeschaltet werden oder für andere Zwecke, z. B. zur Codeumsetzung Full Rate/Half Rate im Downlink-Pfad verwendet werden.

### Zeichnungen

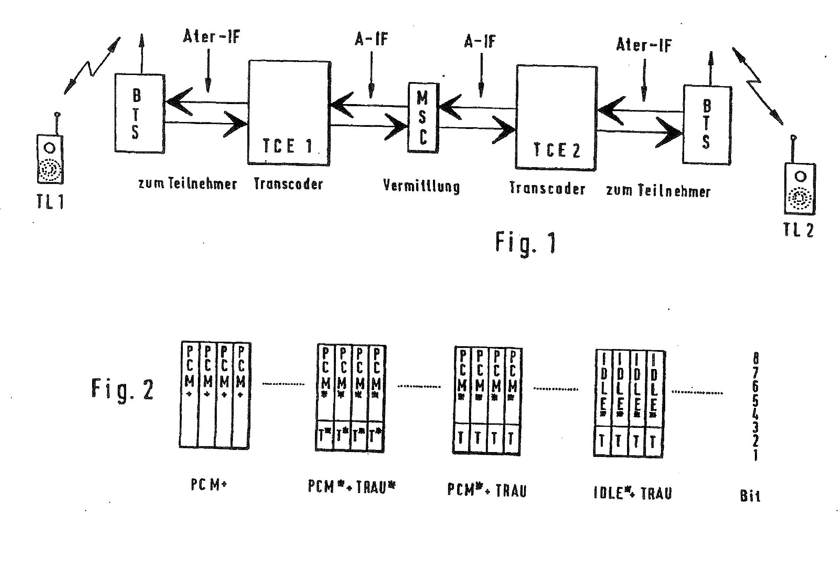

Figur 1 zeigt den Aufbau einer Verbindung zwischen zwei Teilnehmern,
Figur 2 die Daten einer Übertragungsschnittsstelle in zeitlicher Abfolge,
Figur 3 die in Figur 2 verwendeten Muster.
Figur 4 den Handover-Betrieb.

### Beschreibung der Ausführungsbeispiele

Im bestehenden GSM-Netz (Festnetzseite), beispielsweise dem DMCS 900 Netz, wird eine Transcodierung; d. h. eine Umcodierung der Sprachdaten vom vorgegebenen sogenannten TRAU (Transcode and Rate Adaption Unit) - Format nach der GSM-Recommendation 08.60 in das Übertragungsformat des Kommunikationsnetzes, z. B. dem öffentlichen Fernsprechnetz PSTN (PCM-Werte im 64 kbit/s Rahmenformat), stets vorgenommen.

Vom Teilnehmer Tl1 wird eine Verbindung zum Teilnehmer Tl2 geschaltet. Die Transcodiereinrichtung, nachfolgend stets Transcoder genannt, TCE1, die dem Teilnehmer Tl1 zugeordnet ist, sendet im Verkehrskanal des A-Interfaces A-IF eine Kennungsinformation, welche dem zugeschalteten Transcoder TCE2 (Tandem-) signalisiert, daß es sich um eine TFO(tandem free operation) - fähige Transcodiereinrichtung handelt. Die beiden Transcoder schalten, nachdem sie diese Signalisierung erkannt haben, in den TFO-Betrieb und tauschen die Sprachparameter aus. Trifft der Transcoder auf einen nicht TFO-fähigen Transcoder, so erhält dieser die Kennung der Gegenstelle innerhalb einer gewissen Zeit nicht und fällt daher wieder in den normalen Betrieb zurück, in welchem er die Sprache (Sprachabtastwerte) codiert bzw. decodiert.

Die Interfaces von den Transcodern TCE1, TCE2 zu den Teilnehmern Tl1, Tl2, die z. B. über Funkfeststationen BTS anschaltbar sind, sind mit ATER-IF bezeichnet. Die Vermittlung zwischen den Transcodiereinrichtungen ist mit MSC bezeichnet

### Gesprächsaufbau

Beim Gesprächsaufbau stellt die Detektion des Übergangs am A-Interface (A-IF) in den unteren (niedrigwertigsten) beiden Bits der A-Abtastwerte von 00 auf ≠00 den Trigger dar. Der Trigger ist ggf. um T_{trigger} verzögert.

Diese Triggerbedingung ist dabei so gewählt, dass sie folgendem Verhalten der Vermittlungseinrichtung MSC genügt:
a) Die MSC sendet einem nichtbelegten Transcoder ein IDLE-Muster (Ruhemuster).
b) Die MSC schaltet beim Verbindungsaufbau zunächst eine Schleife zwischen Eingang und Ausgang der Leitung zum Transcoder bevor sie durchschaltet.
c) Die MSC schaltet die beiden Richtungen unterschiedlich schnell durch. Dies kann mit T_{trigger} ausgeglichen werden.

### Arbitrierungs-Vorgang

Der Transcoder TCE1 sendet am A-IF Interface anstelle der üblichen 8 Bits-PCM-Abtastwerte nun in den niedrigwertigsten 2 Bits dieser Abtastwerte einen TRAU-Rahmen (dieser wurde bisher zur Übertragung zwischen Funkstation und Transcoder verwendet und enthält Signalparameter zur Nutzdatenrekonstruktion). Der Datenstrom zwischen den Transcodern TCE1 und TCE2 ist demnach unterteilt in einen ersten Datenstrom mit Abtastwerten (PCM-Werten) und einen zweiten Datenstrom mit Signalparametern insbesondere TRAU-Rahmen. Beide Datenströme werden insbesondere während einer Verbindungsaufbauphase gleichzeitig übertragen. In einem solchen TRAU-Rahmen wird für eine vorgegebene Zeitdauer eine Kennungsinformation TRAU* gesendet. Sobald der TRAU* von der Gegenstelle erkannt wurde, wird in den TFO-Betrieb geschaltet. Der Vorgang wird von einem Timer T_{sync} überwacht. Läuft dieser ab, wird in den normalen Betrieb übergegangen.

Alternativ können auch n, n<9 Bits für die Signalisierung verwendet werden mit beliebigen Rahmenstrukturen.

Alternativ kann auf die Kennungsinformation TRAU* verzichtet werden und lediglich die TRAU-Rahmen-Synchronisationsinformation herangezogen werden.

Solange die Synchronisation T_{sync} läuft, werden im Anschluss an die Kennungsinformation TRAU* die vom Aₜₑᵣ-IF ankommenden TRAU-Rahmen in den niedrigwertigen 2 Bits des A-IF gesendet. Dies ermöglicht bei der Gegenstelle einen sofortigen Übergang in den TFO-Betrieb nach dem Erhalt von der Kennungsinformation TRAU*. Die höherwertigen 6 Bits der Abtastwerte werden mit den prozessierten höherwertigen 6 Bits PCM* gefüllt. Dies reduziert den Qualitätsverlust, falls die Gegenstelle kein TFO-fähiger Transcoder ist.

Wird innerhalb einer Wiederholungszeit Tᵣₑₚₑₐₜ (Tᵣₑₚₑₐₜ < T_{sync}) kein TRAU* empfangen, wird nochmals ein TRAU* gesendet. Der Zweck dieses zweiten TRAU* ist im Handover-Fall beschrieben.

### TFO-Betrieb (tandemfreier Betrieb)

Nach dem Erkennen des TRAU* am A-IF werden im Anschluß daran die folgenden TRAU Rahmen(-Inhalte) zum Aₜₑᵣ-IF durchgereicht. Die Anpassung der ControlBits sowie das Timing des Aₜₑᵣ-TRAU-Rahmens wird den lokalen Gegebenheiten angepaßt. Unbrauchbare Rahmen von der Gegenstelle (BFI=1, TRAU*) werden durch den vorherigen Rahmen ersetzt und ggf. ein Muting eingeleitet. Ein evtl. Jitter in der TRAU-Rahmenlänge von +/-2Bits muß ebenfalls ausgeglichen werden. Codec-Umsetzungen, DTX und Muting-Funktionen werden ebenfalls in dieser Richtung durchgeführt. Vorteil ist, daß keine Signalisierung im Gespräch erforderlich ist, falls sich die lokalen Gegebenheiten ändern.

In die Gegenrichtung werden TRAU-Rahmen vom Aₜₑᵣ-IF zum A-IF transparent durchgereicht. Die oberen 6 Bits werden anstelle von PCM* nun durch IDLE* (010101) ersetzt. Dies ermöglicht die Abschaltung der Transcodier-Funktion, da diese Kapazität in einer FR/HR-Systemumgebung ggf. für die HRC <-> FRC Umsetzung benötigt wird. Es vermeidet ebenfalls eine zusätzliche Laufzeit. TRAU-Rahmen mit DatenInhalt können ebenfalls transparent durchgereicht werden.

Anstelle von IDLE* kann auch ein Modulo-n Zähler eingebaut werden, welcher eine noch sicherere Fehlerdetektion erlaubt.

### Handover

Der Handover-Fall ist in die drei nachfolgend beschriebenen Fälle zu untergliedern.

### a) Handover zu einem TFO-fähigen Transcoder

Zunächst wird der Abbruch der ankommenden TRAU-Rahmen registriert und ein Timer Tᵣₑₗₑₐₛₑ gestartet. Der Transcoder empfängt nach einer gewissen Zeit wieder einen TRAU* von dem neu zugeschalteten Transcoder TCE3, stoppt Tᵣₑₗₑₐₛₑ, sendet selbst einen TRAU* und bleibt im TFO-Betrieb. So kann der Transcoder ständig im TFO-Betrieb bleiben.

Kann der erste TRAU* nicht empfangen werden, da die Vermittlung MSC noch nicht durchgeschaltet hat, wird dessen zweiter TRAU* jedoch detektiert und führt zum TFO-Betrieb.

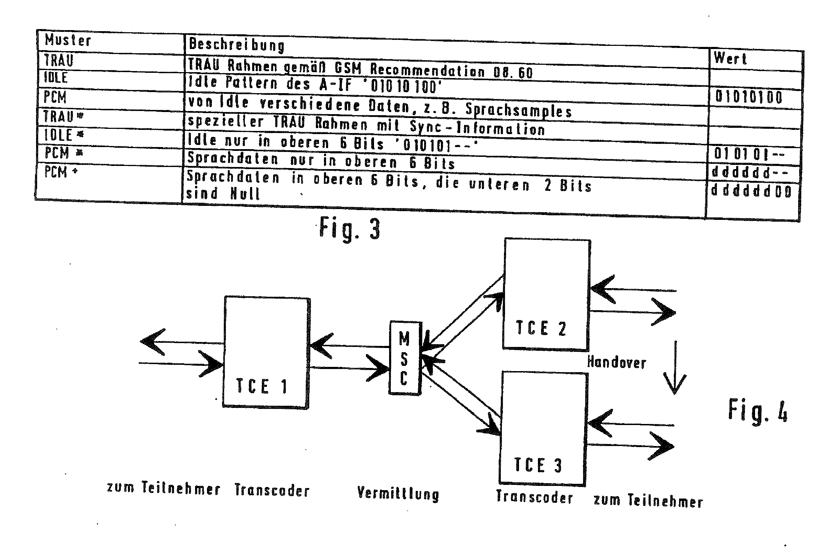

Um möglichst schnell den Handover vom Transcoder TCE2 zum Transcoder TCE3 zu detektieren und um ggf. auf eine Schleife am A-IF nicht zu triggern, wird der neu zugeschaltete Transcoder TCE3 (Fig. 4) beim Gesprächsaufbau "PCM+" senden. "PCM+" sind die PCM-Daten mit den unteren 2 Bits auf '00', um nicht TRAU-Sync-Bits vorzutäuschen. Dies ermöglicht, Störungen beim Teilnehmer zu unterdrücken.

### b) Handover zu einem nicht TFO-fähigen Transcoder

Zunächst wird der Abbruch der ankommenden TRAU-Rahmen registriert und ein Timer Tᵣₑₗₑₐₛₑ gestartet. Der Timer Tᵣₑₗₑₐₛₑ läuft ab und der Transcoder geht wieder in den Arbitrierungszustand, in welchem er die ankommenden Daten am A-IF encodiert. In den abgehenden Datenstrom am A-IF fügt er zu den TRAU-Rahmen nun decodierte PCM-Samples "PCM*" ein. Der zuerst gesendete TRAU ist ein TRAU*. Der Timer T_{sync} wird gestartet. Da vor Ablauf des Timers T_{sync} kein TRAU* empfangen wurde, wird in den normalen Betrieb zurückgefallen.

### c) Handover von einem nicht TFO-fähigen Transcoder

War die bisherige Gegenstelle nicht TFO-fähig, kann der Transcoder den Handover nicht erkennen. Fur die neue Gegenstelle ist es jedoch ein normaler Gesprächsaufbau, in welchem sie, falls sie TFO-fähig ist, zuerst einen TRAU* sendet. Diesen empfängt der Transcoder, sendet ebenfalls einen TRAU* und geht in den TFO-Betrieb. Erfolgt die Durchschaltung verzögert, geht der erste TRAU* verloren und der zweite TRAU* nach Tᵣₑₚₑₐₜ führt zum Erfolg.

### Gesprächsabbruch

Das Gesprächsende wird entweder durch den Abbruch der TRAU-Rahmen am Aₜₑᵣ-IF, oder durch detektierte Fehler am A-IF eingeleitet. Der Ablauf ist dann wie im Falle 'Handover zu einem nicht TFO-fähigen Transcoder'.

### Verhalten bei Fehlern im TFO-Betrieb

### a) Einzel-Fehler am A-IF

Einzel-Fehler konnen nicht in den Datenbits der TRAU-Rahmen erkannt werden. Einzel-Fehler konnen nur in den Synchronisationsbits der TRAU-Rahmen erkannt werden. Maßnahmen sind deshalb daraus keine abzuleiten, da keine Aussage über die Datenbits des TRAU-Rahmens gegeben ist.

### b) Burst-Fehler am A-IF

Stark gestörte TRAU-Rahmen ans Ater-IF weiterzuleiten bedeutet, daß evtl. starke Störgeräusche beim Teilnehmer auftreten können. Daher wird bei Detektion eines einzelnen Fehlers von einem Burst-Fehler ausgegangen, der restliche TRAU-Rahmen verworfen und durch den zuvor gesendeten TRAU-Rahmen ersetzt. Folgende Maßnahmen vermeiden diese Störungen weitestgehend:
1. Doppelte Fehlerüberwachung:
   1.1 durch die Kontrolle der (TRAU-)Rahmen Synchronisation
   1.2 durch die Kontrolle des IDLE*-Musters in den oberen 6 Bits
   zu 1.2 Alternativ: Kontrolle über ein periodisches Muster, beispielsweise eines Modulo-n Zählers, dessen Zählerzustände innerhalb des ersten Datenstromes übertragen werden.
2) Fehlerverschleierungs-Puffer
   Ein Puffer mit ca. x ms(hier 5 ms) erlaubt die Daten bis zum letzten TRAU Sync-Bit zu speichern und im Fehlerfall durch die zuletzt gültigen Daten zu substituieren.

Ist der Burst sehr lang, wird wie im Fall 'Handover zu einem nicht TFO-fähigen Transcoder', in den normalen Betrieb übergegangen.

Bevorzugte Beispiele der vorliegenden Erfindung ergeben sich aus den folgenden Aspekten:
1. Verfahren zum Übertragen von digitalisierten Daten zwischen einer rufenden und einer gerufenen Teilnehmereinheit (TI1, TI2) eines Mobilfunknetzes, wobei für das Übertragen ein vorgegebenes Rahmenformat verwendet wird, mit folgenden Maßnahmen:
   - Schalten einer Verbindung zwischen den Teilnehmereinheiten (TI1, TI2);
   - Signalisieren durch eine erste Transkodiereinrichtung (TCE1), die der rufenden Teilnehmereinheit (TI1) zugeordnet ist, einer zweiten Transkodiereinrichtung (TCE2), die der gerufenen Teilnehmereinheit (TI2) zugeordnet ist, dass es sich bei der ersten Transkodiereinrichtung (TCE1) um eine TFO (Tandemfrei-Betrieb)- fähige Transkodiereinrichtung handelt, wobei das Signalisieren für eine vorgegebene maximale Zeitdauer stattfindet;
   - Umschalten der beiden Transkodiereinrichtungen (TCE1, TCE2), nachdem sie die obengenannte Signalisierung erkannt haben, in einen TFO- Betrieb; und
   - Austauschen von Sprachparametern zwischen den Transkodiereinrichtungen (TCE1, TCE2);
      wobei der Datenstrom zwischen den Transkodiereinrichtungen (TCE1, TCE2), die den Teilnehmereinheiten (TI1, TI2) zugeordnet sind, sowohl während der Zeitphase der Signalisierung, als auch während der Zeitphase des Austausches von Sprachparametern in einen ersten Datenstrom mit Sprachabtastwerten und in einen zweiten Datenstrom unterteilt wird; und
      wobei der zweite Datenstrom während der Zeitphase der Signalisierung Kennungsinformationen und während der Zeitphase des Austausches Sprachparameter zur Sprachdatenrekonstruktion enthält.
2. Verfahren nach Aspekt 1, **dadurch gekennzeichnet, dass** für die Signalparameter des zweiten Datenstroms die für Mobilfunksysteme bekannten TRAU (Transcoding rate adaption unit) -Rahmen verwendet werden.
3. Verfahren nach Aspekt 1 oder 2, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.
4. Verfahren nach Aspekt 3, **dadurch gekennzeichnet, dass** der zweite Datenstrom durch Reduktion der Daten des ersten Datenstromes gebildet wird.
5. Verfahren nach Aspekt 3 oder 4, **dadurch gekennzeichnet, dass** die höherwertigen Bits als PCM-Abtastwerte übertragen werden.
6. Verfahren nach einem der Aspekte 1 bis 5, **dadurch gekennzeichnet, dass** die zweite Transkodiereinrichtung (TCE2) der ersten Transkodiereinrichtung (TCE1) signalisiert, dass es sich bei der zweiten Transkodiereinrichtung (TCE2) um eine TFO-fähige Transkodiereinrichtung handelt, nachdem die zweite Transkodiereinrichtung (TCE2) von der ersten Transkodiereinrichtung (TCE1) die Kennungsinformationen empfangen hat.
7. Verfahren nach einem der Aspekte 1 bis 6, **dadurch gekennzeichnet, dass** die Kennungsinformationen nach einem Übergang in den TFO-Betrieb eingebettet in TRAU-Rahmen zwischen den Transkodiereinrichtungen (TCE1, TCE2) übertragen werden.
8. Verfahren nach einem der Aspekte 1 bis 7, **dadurch gekennzeichnet, dass** unmittelbar nach dem Aussenden der Kennungsinformationen die Signalparameter im TRAU-Rahmen gesendet werden.
9. Verfahren nach einem der Aspekte 1 bis 8, **dadurch gekennzeichnet, dass** aus dem TFO-Betrieb zwischen den Transkodiereinrichtungen (TCE1, TCE2) ein Handover zu einer anderen TFO-fähigen oder zu einer nicht TFO-fähigen Transkodiereinrichtung ermöglicht wird.

## Patentansprüche

1. Verfahren zum Übertragen von Daten eines Mobilfunknetzes, insbesondere von GSM-Daten, zwischen einem rufenden Teilnehmer (TL1), dem eine erste Umcodiereinrichtung (TCE1) zugeordnet ist, und einem gerufenen Teilnehmer (TL2), dem eine zweite Umcodiereinrichtung (TCE2) zugeordnet ist,
wobei für das Übertragen ein vorgegebenes Rahmenformat verwendet wird, mit folgenden Maßnahmen:
- Der Datenstrom zwischen den Umcodiereinrichtungen (TCE1, TCE2) wird in einen ersten Datenstrom mit Sprachabtastwerten, insbesondere PCM-Sprachabtastwerten zur Übertragung und in einen zweiten Datenstrom mit Signalparametern zur Sprachdatenrekonstruktion, insbesondere TRAU-Rahmen unterteilt;
- die so unterteilten Datenströme werden während eines TFO, Tandem Free Operation, -Betriebs gleichzeitig von der ersten Umcodiereinrichtung (TCE1) via ein A-Interface übertragen, über das die erste Umcodiereinrichtung (TCE1) mit einer Vermittlungseinrichtung verbunden ist;
- bei einem Handover von der zweiten Umcodiereinrichtung (TCE2) zu einer nicht-TFO-fähigen Umcodiereinrichtung (TCE3) wird in der ersten Umcodiereinrichtung (TCE1) ein Abbruch der von der zweiten Umcodiereinrichtung (TCE2) ankommenden Signalparameter registriert, und es läuft eine erste vorbestimmte Zeit, Tᵣₑₗₑₐₛₑ,
an, wobei nach Ablauf der ersten vorbestimmten Zeit, Tᵣₑₗₑₐₛₑ, vom A-Interface ankommende Daten enkodiert werden, wobei im zum A-Interface abgehenden Datenstrom zu den TRAU-Rahmen decodierte Sprachabtastwerte "PCM*" eingefügt werden, wobei der zuerst gesendete TRAU ein TRAU* ist, wobei die Sprachabtastwerte "PCM*" die Sprachabtastwerte mit den prozessierten höherwertigen 6 Bits sind, wobei der TRAU* eine Kennungsinformation darstellt; und
- wobei eine zweite vorbestimmte Zeit, T_{sync}, in der ersten Umcodiereinrichtung (TCE1) anläuft, wobei die erste Umcodiereinrichtung (TCE1) nach Ablauf der zweiten vorbestimmten Zeit, Tsync,
in einen Normalbetrieb zurückfällt, in dem die Sprachabtastwerte codiert bzw. decodiert werden.

2. Verfahren nach Anspruch 1, **dadurch gekennzeichnet, dass** für die Signalparameter des zweiten Datenstroms die für Mobilfunksysteme bekannten TRAU -Rahmen verwendet werden.

3. Verfahren nach Anspruch 1 oder 2, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.

4. Verfahren nach Anspruch 3, **dadurch gekennzeichnet, dass** der zweite Datenstrom durch Reduktion der Daten des ersten Datenstromes gebildet wird.

5. Verfahren nach Anspruch 3 oder 4, **dadurch gekennzeichnet, dass** die höherwertigen Bits als PCM-Abtastwerte übertragen werden.

6. Verfahren nach einem der Ansprüche 1 bis 5, **dadurch gekennzeichnet, dass** zu einem Verbindungsaufbau zwischen den Teilnehmern (TL1, TL2) anstelle der Signalparameter für eine vorgegebene Zeitdauer eine Kennungsinformation (TRAU*) gesendet wird.

7. Verfahren nach einem der Ansprüche 1 bis 6, **dadurch gekennzeichnet, dass** in einer Zeitphase eines Verbindungsaufbaus nur die Abtastwerte gesendet werden und anstelle der Signalparameter Nullfolgen eingeblendet werden.

8. Verfahren nach Anspruch 7, **dadurch gekennzeichnet, dass** die Nullfolgen zeitlich vor der Kennungsinformation (TRAU*) eingeblendet werden.

9. Verfahren nach einem der Ansprüche 6 bis 8, **dadurch gekennzeichnet, dass** unmittelbar nach dem Aussenden der Kennungsinformation (TRAU*) die Signalparameter im TRAU-Rahmen gesendet werden.

10. Verfahren nach einem der Ansprüche 1 bis 9, **dadurch gekennzeichnet, dass** jene Umcodiereinrichtung (TCE2), die einem gerufenen Teilnehmer (TL2) zugeordnet ist, nach Erhalt der Kennungsinformation (TRAU*) von der Umcodiereinrichtung (TCE1), die dem rufenden Teilnehmer (TL1) zugeordnet ist, in den tandemfreien Ubertragungsmode übergeht; d. h. die Signalparameter/Trau-Rahmen transparent durchschaltet.

11. Verfahren nach Anspruch 10, **dadurch gekennzeichnet, dass** nach dem Übergang in den tandemfreien Übertragungsmode anstelle der zu codierenden Abtastwerte ein periodisches Ruhemuster (IDLE*) gesendet wird.

12. Verfahren nach einem der Ansprüche 6 bis 11, **dadurch gekennzeichnet, dass** der Abbruch einer Verbindung oder ein Übertragungsfehler durch Detektion der TRAU-Rahmen-Synchronisierungsinformation und/oder durch Kontrolle des periodischen Ruhemusters (IDLE*) registriert wird.

13. Verfahren nach einem der Ansprüche 2 bis 10, **dadurch gekennzeichnet, dass** der Abbruch einer Verbindung oder ein Übertragungsfehler durch Detektion der TRAU-Rahmen-Synchronisierungsinformation und/oder durch Auswertung eines periodischen Musters, der Information eines Modulo-n Zählers, dessen Zählerzustände innerhalb des ersten Datenstromes übertragen werden, registriert wird.

14. Verfahren nach einem der Ansprüche 11 bis 13, **dadurch gekennzeichnet, dass** beim Verbindungsaufbau der zweite Datenstrom daraufhin überwacht wird, ob anstelle der Nullfolgen andere Bitkombinationen eintreffen, dass aus dieser Überwachung ein Triggersignal abgeleitet wird, das - ggf. nach einer Verzögerung - mittels einer zwischen den Umcodiereinrichtungen (TCE1, TCE2) befindlichen Vermittlungseinrichtung (MSC) zu folgender Arbeitsweise führt:
- die Vermittlungseinrichtung (MSC) sendet bei einer nicht belegten Transcodiereinrichtung (TCR1, TCR2) das Ruhemuster (IDLE*),
- die Vermittlungseinrichtung (MSC) schaltet ggf. beim Verbindungsaufbau zunächst eine Schleife zwischen dem Eingang und dem Ausgang der Leitung zur Umcodiereinrichtung (TCE1, TCE2) bevor sie durchschaltet,
- wenn die Vermittlungseinrichtung (MSC) in beiden Richtungen unterschiedlich schnell durchschaltet, wird dies mit dem Triggersignal ausgeglichen.

15. Verfahren nach einem der Ansprüche 12 bis 14, **dadurch gekennzeichnet, dass** fehlerhafte TRAU-Rahmen von der Gegenstelle durch vorherige TRAU-Rahmen ersetzt werden und ggf. ein Muting eingeleitet wird.

16. Verfahren nach einem der vorherigen Ansprüche, wobei die erste vorbestimmte Zeit, Tᵣₑₗₑₐₛₑ, und/oder die zweite vorbestimmte Zeit, T_{sync}, als Zählzeit ausgeführt sind.

17. Verfahren nach einem der Ansprüche 12 bis 16, **dadurch gekennzeichnet, dass** die jeweils zuletzt gesendeten Daten zwischengespeichert werden und zu einer Fehlerverschleierung fehlerhafte Daten ersetzen.

## Claims

1. Method for transmitting data of a mobile radio network, in particular GSM data, between a calling subscriber (TL1), to which a first code conversion device (TCE1) is assigned, and a called subscriber (TL2), to which a second code conversion device (TCE2) is assigned, whereby a predefined frame format is used for the transmission, with the following measures:
- the data stream between the code conversion devices (TCE1, TCE2) is divided into a first data stream having speech sampling values, particularly PCM speech sampling values, for transmission and into a second data stream having signal parameters for speech data reconstruction, particularly TRAU frames;
- the data streams divided in this manner are transmitted simultaneously by the first code conversion device (TCE1) via an A interface, via which the first code conversion device (TCE1) is connected to a switching device, during a TFO, tandem-free operation, mode;
- in the event of a handover from the second code conversion device (TCE2) to a non-TFO code conversion device (TCE3), termination of the signal parameters arriving from the second code conversion device (TCE2) is registered in the first code conversion device (TCE1), and a first predetermined time, Tᵣₑₗₑₐₛₑ, starts, whereby after the first predetermined time, Tᵣₑₗₑₐₛₑ, has elapsed, data arriving from the A interface are encoded, whereby speech sampling values "PCM*" decoded for the TRAU frames are inserted into the data stream departing for the A interface, whereby the TRAU sent first is a TRAU*, whereby the speech sampling values "PCM*" are the speech sampling values with the processed high-order 6 bits, whereby the TRAU* is a piece of identification information; and
- whereby a second predetermined time, T_{sync}, starts in the first code conversion device (TCE1), whereby the first code conversion device (TCE1) reverts to a normal mode, in which the speech sampling values are coded and decoded, after the second predetermined time, T_{sync}, has elapsed.

2. Method according to Claim 1, **characterized in that** the TRAU frames known for mobile systems are used for the signal parameters of the second data stream.

3. Method according to Claim 1 or 2, **characterized in that** the first data stream comprises the high-order bits of a parallel bit sequence and the second data stream comprises the corresponding low-order bits of this sequence.

4. Method according to Claim 3, **characterized in that** the second data stream is formed by reducing the data of the first data stream.

5. Method according to Claim 3 or 4, **characterized in that** the high-order bits are transmitted as PCM sampling values.

6. Method according to one of Claims 1 to 5, **characterized in that**, for a connection set-up between the subscribers (TL1, TL2), identifier information (TRAU*) is transmitted during a predefined time period instead of the signal parameters.

7. Method according to one of Claims 1 to 6, **characterized in that**, in a time phase of a connection set-up, only the sampling values are transmitted and zero sequences are inserted instead of the signal parameters.

8. Method according to Claim 7, **characterized in that** the zero sequences are inserted temporally before the identifier information (TRAU*).

9. Method according to one of Claims 6 to 8, **characterized in that** the signal parameters are transmitted in the TRAU frame immediately after the transmission of the identifier information (TRAU*).

10. Method according to one of Claims 1 to 9, **characterized in that** the code conversion device (TCE2) which is allocated to a called subscriber (TL2), after receiving the identifier information (TRAU*) from the code conversion device (TCE1) which is allocated to the calling subscriber (TL1), switches to tandem-free transmission mode; i.e. transparently through-connects the signal parameters/Trau frames.

11. Method according to Claim 10, **characterized in that**, following the switch to tandem-free transmission mode, a periodic idle pattern (IDLE*) is transmitted instead of the sampling values which are to be coded.

12. Method according to one of Claims 6 to 11, **characterized in that** the interruption of a connection or a transmission fault is registered by detecting the TRAU frame synchronization information and/or by monitoring the periodic idle pattern (IDLE*).

13. Method according to one of Claims 2 to 10, **characterized in that** the interruption of a connection or a transmission fault is registered by detecting the TRAU frame synchronization information and/or by evaluating a periodic pattern, the information of a modulo-n counter whose counter readings are transmitted within the first data stream.

14. Method according to one of Claims 11 to 13, **characterized in that**, when the connection is set up, the second data stream is monitored to establish whether other bit combinations are received instead of the zero sequences, **in that** a trigger signal is derived from this monitoring which, if necessary after a delay, produces the following mode of operation by means of a switching device (MSC) located between the code conversion devices (TCE1, TCE2):
- the switching device (MSC) transmits the idle pattern (IDLE*) if a transcoding device (TCR1, TCR2) is not busy,
- the switching device (MSC), if necessary when the connection is set up, initially switches a loop between the input and output of the line to the code conversion device (TCE1, TCE2) before through-connecting,
- if the switching device (MSC) through-connects at different speeds in both directions, this is compensated with the trigger signal.

15. Method according to one of Claims 12 to 14, **characterized in that** errored TRAU frames are replaced with previous TRAU frames by the remote station and, if necessary, muting is initiated.

16. Method according to one of the preceding claims, whereby the first predetermined time, Tᵣₑₗₑₐₛₑ, and/or the second predetermined time, T_{sync}, are embodied as a counting period.

17. Method according to one of Claims 12 to 16, **characterized in that** the respective last transmitted data are temporarily stored and replace errored data for error masking.

## Revendications

1. Procédé de transmission de données d'un réseau de téléphones mobiles, notamment de données GSM, entre un poste appelant (TL1) auquel est associée une première installation de transcodage (TCE1) et un poste appelé (TL2) auquel est associée une deuxième installation de transcodage (TCE2) selon lequel pour la transmission on utilise un format de trame prédéterminé, avec les caractéristiques suivantes :
- le flux de données entre les installations de transcodage (TCE1, TCE2) est subdivisé en un premier flux de données avec des valeurs de détection de la voix, en particulier des valeurs de détection de la voix PCM, pour la transmission, et en un second flux de données avec des paramètres de signal pour la reconstruction des données vocales, en particulier des trames TRAU ;
- les flux de données ainsi subdivisés sont transmis pendant un mode de fonctionnement libre en tandem, TFO, simultanément par la première installation de transcodage (TCE1) via une interface A, par le biais de laquelle la première installation de transcodage (TCE1) est connectée à une installation de transmission;
- lors d'un transfert de la deuxième installation de transcodage (TCE2) à une installation de transcodage sans TFO (TCE3), une interruption des paramètres de signal provenant de la deuxième installation de transcodage (TCE2) est enregistrée dans la première installation de transcodage (TCE1) et un premier intervalle de temps prédéterminé, Tᵣₑₗₑₐₛₑ, s'écoule, après l'écoulement du premier intervalle de temps prédéterminé, Tᵣₑₗₑₐₛₑ, les données provenant de l'interface A étant encodées, des valeurs de détection de la voix décodées "PCM*" étant introduites dans le flux de données partant vers l'interface A à la trame TRAU, la première TRAU envoyée étant une TRAU*, les valeurs de détection de la voix "PCM*" étant les valeurs de détection de la voix avec les 6 bits traités de plus haute valeur, la TRAU* constituant une information caractéristique ; et
- un deuxième intervalle de temps prédéterminé, T_{sync}, s'écoulant dans la première installation de transcodage (TCE1), la première installation de transcodage (TCE1), après l'écoulement du deuxième intervalle de temps prédéterminé, T_{sync}, revenant à un fonctionnement normal, dans lequel les valeurs de détection de la voix sont codées ou décodées.

2. Procédé selon la revendication 1,
**caractérisé en ce que**
pour les paramètres deu signal du second flux de données on utilise les trames TRAU connues pour les systèmes de téléphones mobiles.

3. Procédé selon l'une quelconque des revendications 1 ou 2,
**caractérisé en ce que**
le premier flux de données se compose des bits de valeur élevée d'une séquence de bits parallèle et le second flux de données se compose des bits de valeur faible correspondants de cette séquence de bits.

4. Procédé selon la revendication 3,
**caractérisé en ce**
**qu'**on forme le second flux de données par réduction des données du premier flux de données.

5. Procédé selon l'une quelconque des revendications 3 ou 4,
**caractérisé en ce**
**qu'**on transmet les bits de valeur élevée sous la forme de valeur de détection PCM.

6. Procédé selon l'une quelconque des revendications 1 à 5, **caractérisé en ce**
**qu'**une information caractéristique (TRAU*) est envoyée à la place des paramètres de signal pour une durée prédéterminée pour établir une communication entre des postes (TL1, TL2).

7. Procédé selon l'une quelconque des revendications 1 à 6,
**caractérisé en ce que**
dans une phase de temps au cours de l'établissement d'une liaison on émet seulement les valeurs de détection et à la place des paramètres de signal on insère des suites de zéros.

8. Procédé selon la revendication 7,
**caractérisé en ce**
**qu'**on insère les suites de zéros, avant l'information caractéristique (TRAU*).

9. Procédé selon l'une quelconque des revendications 6 à 8,
**caractérisé en ce que**
directement après l'émission de l'information caractéristique (TRAU*) on émet les paramètres de signal dans la trame TRAU.

10. Procédé selon l'une quelconque des revendications 1 à 9,
**caractérisé en ce que**
l'installation de transcodage (TCE2) associée au poste appelé (TL2), après réception de l'information caractéristique (TRAU*) de l'installation de transcodage (TCE1), associée au poste appelant (TL1), passe en mode de transmission sans tandem, c'est-à-dire qu'elle commute en transparence les paramètres de signal/trame TRAU.

11. Procédé selon la revendication 10,
**caractérisé en ce**
**qu'**après le passage en mode de transfert sans tandem, à la place des valeurs de détection à coder, on émet un motif de repos (IDLE*) périodique.

12. Procédé selon l'une quelconque des revendications 6 à 11,
**caractérisé en ce que**
l'interruption d'une liaison ou d'un défaut de transmission est enregistrée par la détection de l'information de synchronisation de trame TRAU et/ou par le contrôle du motif de repos (IDLE*) périodique.

13. Procédé selon l'une quelconque des revendications 2 à 10,
**caractérisé en ce que**
la coupure d'une liaison ou un défaut de transmission sont enregistrés par la détection de l'information de synchronisation de trame TRAU et/ou par l'exploitation d'un modèle périodique, de l'information d'un compteur Modulo-n dont les états de comptage sont transmis dans le premier flux de données.

14. Procédé selon l'une quelconque des revendications 11 à 13,
**caractérisé en ce que**
lors de l'établissement de la liaison on surveille le second flux de données pour déterminer si à la place de la suite de zéros on reçoit d'autres combinaisons de bits, on en déduit de cette surveillance un signal de déclenchement qui, le cas échéant après un retard, conduit par une installation de transmission (MSC) prévue entre les installations de transcodage (TCE1, TCE2) au fonctionnement suivant :
- l'installation de transmission (MSC) envoie le motif de repos (IDLE*) lorsqu'une installation de transcodage (TCR1, TCR2) n'est pas occupée,
- l'installation de transmission (MSC) commute le cas échéant lors de l'établissement de la liaison, tout d'abord une boucle entre l'entrée et la sortie de la ligne vers l'installation de transcodage (TCE1, TCE2) avant que celle-ci ne soit commutée,
- lorsque l'installation de transmission (MSC) commute à des vitesses différentes dans les deux directions, cette différence est compensée par le signal de déclenchement.

15. Procédé selon l'une quelconque des revendications 12 à 14,
**caractérisé en ce que**
les trames TRAU défectueuses sont remplacées par le poste opposé, par les trames TRAU précédentes et le cas échéant on commence un silence.

16. Procédé selon l'une quelconque des revendications précédentes,
dans lequel le premier intervalle de temps prédéterminé, Tᵣₑₗₑₐₛₑ, et/ou le deuxième intervalle de temps prédéterminé, T_{sync}, sont effectués comme temps de comptage.

17. Procédé selon l'une quelconque des revendications 12 à 16,
**caractérisé en ce que**
les données envoyées chaque fois en dernier lieu sont mémorisées de façon intermédiaire et remplacent les données défectueuses pour cacher les défauts.
